# DEMANDE DE BREVET EUROPEEN

(11) **EP 2 505 052 A1**
(43) Date de publication de la demande: **03.10.2012**
(21) Numéro de dépôt: 12162516.4
(22) Date de dépôt: 30.03.2012
(51) Int. Cl.: A01G 25/00, E01C 13/08

(54) **Installation végétalisée**

(30) Priorité: 01.04.2011 FR 1152842
(71) Demandeur: Alcea, 78410 Flins-sur-Seine (FR)
(72) Inventeur: Corbel, Jean-Pierre, 69007 Lyon (FR); Jerusalem, Patrick, 69007 Lyon (FR)
(74) Mandataire: Guérin, Jean-Philippe

(57) **Abrégé**

L'invention concerne une installation végétalisée (1), comprenant :
-un substrat (102) d'enracinement de végétaux (101) perméable à l'eau ;
-un réservoir d'eau (300) disposé à l'aplomb du substrat et s'étendant sur sensiblement toute la surface du substrat, le réservoir présentant une hauteur de stockage d'eau supérieure à 150mm ;
-une paroi étanche (4) séparant le substrat et le réservoir ;
-un dispositif de régulation de niveau d'eau collectant de l'eau dépassant un certain niveau dans le substrat pour l'introduire dans le réservoir ;
-un dispositif d'introduction d'eau prélevant de l'eau dans le réservoir pour l'introduire dans le substrat.

## Description

L'invention concerne toute installation végétalisée, telle que terrains de sport, installations de loisirs, espaces verts, terrains destinés à la production horticole, et en particulier la gestion des apports hydrauliques de telles surfaces.

Les surfaces concernées sont souvent importantes, en particulier celles destinées aux terrains de sport (football, rugby,...) qui nécessitent du fait de la fréquence et de l'intensité de leur utilisation, un entretien intense et d'importants apports d'eau, dont la gestion est difficilement maîtrisée. Afin d'éviter un assèchement du gazon et de faciliter sa croissance, on a recours à l'arrosage fréquent du terrain. Un tel arrosage induit cependant des pertes importantes par évaporation et donc une utilisation d'eau sans bénéfice pour le gazon. L'arrosage nécessite ainsi de prélever des quantités importantes d'eau sur un réseau de distribution ou dans une nappe phréatique ce qui s'avère incompatible avec des objectifs de développement durable.

Ainsi, des installations de loisirs présentant des canalisations d'introduction d'eau enterrées dans le substrat ont été développées. De telles installations permettent de réduire la quantité d'eau consommée sur les réseaux de distribution pour alimenter les végétaux. Par ailleurs, un tel dispositif d'introduction d'eau permet de maintenir de l'humidité dans le substrat et de favoriser une pousse homogène des végétaux ou du gazon.

Cependant, de telles installations présentent également des inconvénients. La quantité d'eau prélevée sur le réseau s'avère encore importante et de tels terrains ne permettent pas de faire face à l'évacuation des eaux, en cas de fortes pluies.

L'invention vise à résoudre un ou plusieurs de ces inconvénients. L'invention porte ainsi sur une installation végétalisée comprenant :
- un substrat d'enracinement de végétaux perméable à l'eau ;
- un réservoir d'eau disposé à l'aplomb du substrat et s'étendant sur sensiblement toute la surface végétalisée du substrat, le réservoir présentant une hauteur de stockage d'eau supérieure à 150mm ;
- une paroi étanche séparant le substrat et le réservoir ;
- un dispositif de régulation de niveau d'eau collectant de l'eau dépassant un certain niveau dans le substrat pour l'introduire dans le réservoir ;
- un dispositif d'introduction d'eau prélevant de l'eau dans le réservoir pour l'introduire dans le substrat.

Selon une variante, le dispositif d'introduction d'eau comprend des tuyaux enterrés présentant des orifices de distribution d'eau répartis sur leur longueur.

Selon encore une variante, lesdits tuyaux sont horizontaux.

Selon une autre variante, le dispositif de régulation de niveau d'eau comporte des moyens de réglage dudit niveau d'eau dans le substrat.

Selon encore une autre variante, le dispositif de régulation de niveau d'eau comprend :
- un boîtier collecteur d'eau en communication avec le substrat ;
- un tube en saillie verticalement à l'intérieur du boîtier et en communication avec le réservoir, l'extrémité supérieure du tube définissant ledit niveau d'eau dans le substrat.

Selon une variante, le réservoir comprend une pluralité de caissons en communication et disposés au même niveau.

Selon encore une variante, le réservoir présente un orifice d'évacuation d'eau définissant la hauteur de stockage d'eau dans le réservoir, le réservoir comportant un volume d'air au-dessus de ladite hauteur de stockage d'eau.

Selon une autre variante, le réservoir présente une capacité de stockage supérieure à 300 litres par mètre carré de substrat.

Selon encore une autre variante, la surface supérieure du substrat est à l'air libre, et le réservoir présente une capacité de stockage supérieure à la différence entre la précipitation annuelle au niveau de l'installation et la quantité d'évapotranspiration annuelle du substrat, en année humide.

Selon une variante, le substrat occupe une surface supérieure à 200 m².

D'autres caractéristiques et avantages de l'invention ressortiront clairement de la description qui en est faite ci-après, à titre indicatif et nullement limitatif, en référence aux dessins annexés, dans lesquels :
- la figure 1 est une vue de dessus schématique d'un mode de réalisation d'une installation de loisirs ;
- la figure 2 est une en coupe de différentes couches de l'installation de loisirs de la figure 1 ;
- la figure 3 est une vue en coupe schématique de dessus du circuit hydraulique traversant un substrat de l'installation de loisirs de la figure 1 ;
- la figure 4 est une vue en coupe transversale de l'installation de loisirs au niveau d'un dispositif de régulation de niveau d'eau dans le substrat ;
- la figure 5 est une vue en coupe transversale de l'installation de loisirs au niveau d'un dispositif d'introduction d'eau dans le substrat.

L'invention propose une installation végétalisée telle qu'une installation de loisirs, comportant un substrat d'enracinement séparé d'un réservoir d'eau par une paroi étanche. Le réservoir d'eau est placé à l'aplomb du substrat et s'étend sensiblement sur toute sa surface. Un dispositif de régulation permet de collecter l'eau dépassant un niveau dans le substrat pour l'introduire dans le réservoir. Un dispositif d'introduction d'eau prélève de l'eau dans le réservoir pour l'introduire dans le substrat.

L'invention fournit ainsi de multiples avantages. L'installation végétalisée selon l'invention permet de réguler le niveau d'eau dans le substrat pour une pousse optimale de végétaux, l'installation végétalisée permet de récupérer et stocker pour une utilisation ultérieure un excédent d'eau de pluie pour limiter les apports provenant du réseau d'eau, voire rendre le terrain sensiblement autonome par rapport au réseau d'eau, et l'installation présente une emprise au sol limitée. L'installation permet également de supprimer les pertes par évaporation rencontrées avec un arrosage traditionnel.

L'invention permet ainsi une maintenance plus facile d'un gazon naturel pour les collectivités et garantit une pousse homogène d'un tel gazon.

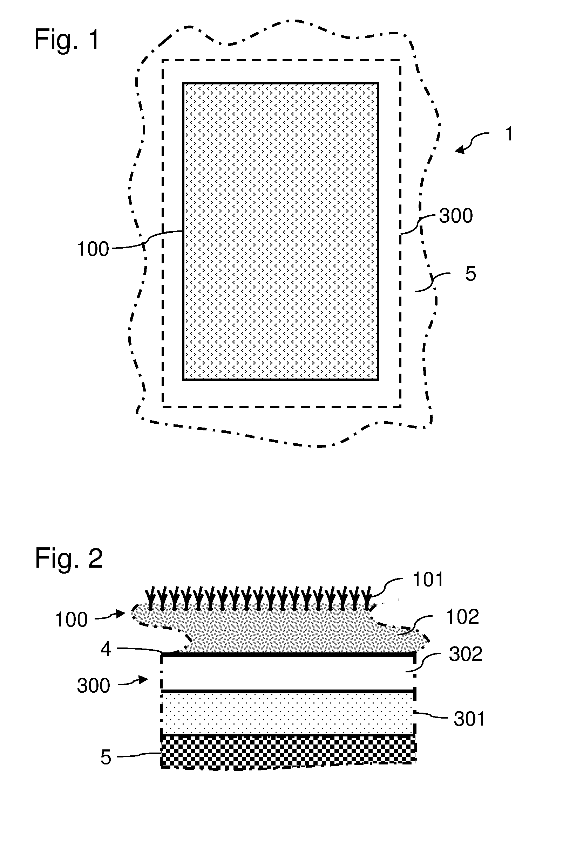

La figure 1 est une vue de dessus schématique d'un mode de réalisation de l'invention sous forme d'installation de loisir 1. La figure 2 est une vue en coupe transversale de l'installation illustrant ses différentes couches. L'installation 1 est en l'occurrence un terrain pour la pratique du rugby ou du football. L'invention s'applique avantageusement à tout autre type d'installation de loisirs présentant une surface d'enregistrement importante, par exemple supérieure à 200 m². L'installation 1 présente une surface de jeu 100 munie d'une couche comprenant un substrat de sable ou de terre 102 connu en soi dans lequel du gazon 101 se développe. Le substrat 102 repose sur un réservoir 300 étanche. Le réservoir 300 est disposé dans un évidement ménagé dans le sol 5. Le substrat 102 est séparé de façon étanche du réservoir 300 par l'intermédiaire d'une paroi 4. Le réservoir 300 est ainsi disposé à l'aplomb du substrat 102. Ainsi, l'emprise au sol du réservoir 300 est limitée à la surface nécessaire pour l'installation 1. De plus, le réservoir 300 et le terrain 100 peuvent bénéficier de mêmes travaux préalables de terrassement du sol 5.

Le réservoir 300 s'étend sensiblement sur toute la surface du substrat végétalisée. Ainsi, le volume de stockage du réservoir 300 est optimisé sans nécessiter un réservoir d'une hauteur importante. De plus, une portance homogène peut être assurée pour toute la surface de jeu 100. Dans l'exemple illustré, le réservoir 300 s'étend de façon avantageuse latéralement au-delà des limites de la surface de jeu 100. Ainsi, la capacité de stockage du réservoir 300 est maximisée. Dans le cas où l'installation 1 est disposée au milieu de tribunes, de la surface est généralement disponible à la périphérie de la surface de jeu 100, cette surface disponible étant généralement utilisée pour la réalisation de pistes d'athlétisme ou de dégagements par rapport à la surface 100.

Le substrat 102 est un substrat connu en soi destiné à l'enracinement du gazon. Un des objectifs de l'invention est de maintenir un niveau d'eau à un niveau intermédiaire dans l'épaisseur du substrat 102, de façon à permettre à la fois une alimentation en eau des racines du gazon 101 tout en évitant leur pourrissement par excès d'eau, une aération du substrat 102, et un drainage des eaux de pluie tombant sur la surface de jeu 100. Un tel substrat 102 est perméable à l'eau et permet ainsi une diffusion de l'eau par capillarité entre le fond du substrat 102 et les racines. Un tel substrat 102 présente avantageusement une épaisseur de l'ordre de 400 mm, pour permettre à la fois la pousse du gazon 101, le drainage des eaux de pluie et un maintien d'une couche d'eau résiduelle au fond du substrat.

La paroi étanche 4 permet d'accumuler de l'eau dans le substrat 102 jusqu'à atteindre le niveau souhaité. La paroi étanche 4 peut par exemple être constituée d'un film d'étanchéité en polyéthylène d'une épaisseur de 40 µm posée sur le réservoir 300. Un tel film peut aisément être soudé à sa périphérie pour garantir l'étanchéité entre le substrat 102 et le réservoir 300. Comme illustré par la suite, l'installation 1 comprend également une paroi d'étanchéité verticale 103 s'étendant sur la périphérie du substrat 102 et évitant la perte de l'eau du substrat 102 vers le sol 5. La paroi 103 est reliée de façon étanche à la paroi 4.

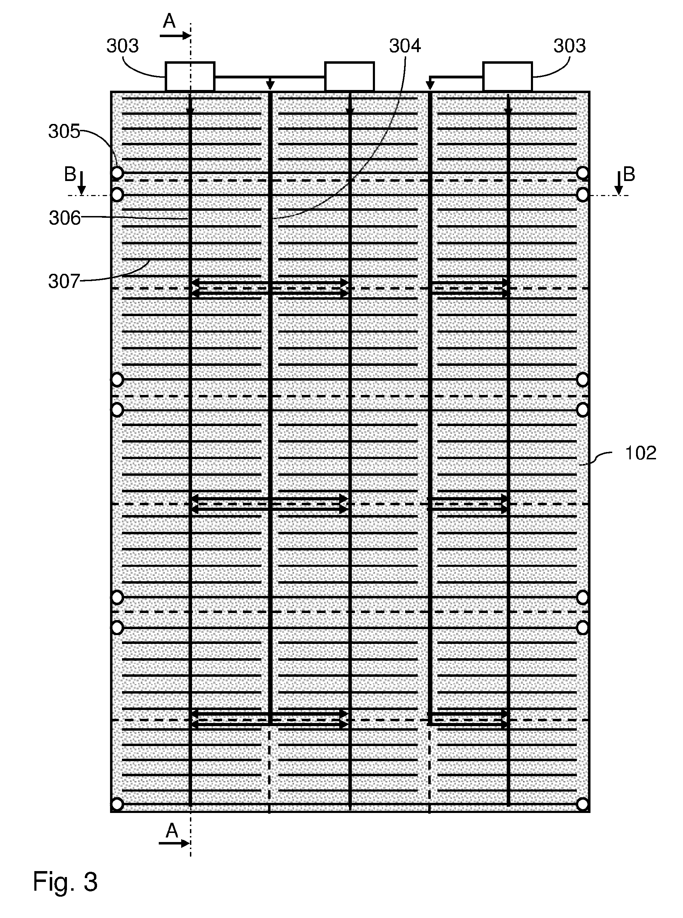

La figure 3 est une vue en coupe schématique de dessus de l'installation 1 au niveau de canalisations enterrées à l'intérieur du substrat 102. Ces canalisations sont par exemple enterrées à une profondeur d'environ 300 mm à l'intérieur du substrat 102. Pour son alimentation par ces canalisations, le substrat 102 de l'exemple est subdivisé en 21 cellules présentant chacune un réseau de canalisations pour répartir l'introduction d'eau. Le substrat de l'exemple est ainsi subdivisé en 3 rangées transversales de 7 cellules. Chaque cellule présente ainsi par exemple une surface comprise entre 400 et 500 m². La direction longitudinale correspond dans l'exemple à la longueur du terrain, la direction transversale correspondant à sa largeur.

Chaque cellule comporte une canalisation longitudinale 306, qui traverse tout le terrain. Ces canalisations 306 sont non poreuses et canalisent l'eau jusqu'à différentes canalisations 307 s'étendant transversalement, et sont réparties longitudinalement dans chaque cellule. Les canalisations transversales 307 s'étendent sensiblement sur toute la largeur de chaque cellule. Les canalisations transversales 307 sont avantageusement poreuses et comportent par exemple des orifices de distribution d'eau répartis sur leur longueur. Ces canalisations 307 peuvent également présenter une simple fente s'étendant selon leur axe. Une telle porosité permet de répartir la distribution d'eau dans chaque cellule, et également d'assurer le drainage de l'eau présente dans le substrat 102 vers différents dispositifs de régulation de niveau d'eau 305. Les canalisations présentes dans le substrat 102 permettent ainsi d'une part d'introduire de l'eau dans le substrat 102 lors d'un déficit de pluviométrie ou de collecter de l'eau du substrat 102 lors d'un excédent de pluviométrie. Les canalisations 307 ayant à la fois une fonction d'introduction d'eau et de collecte d'eau, ces canalisations sont avantageusement horizontales. Avec une répartition longitudinale appropriée des canalisations 307 dans les cellules, on peut obtenir un drainage et une introduction d'eau homogènes dans le substrat 102.

Des dispositifs d'introduction d'eau 303 sont disposés au niveau d'une extrémité axiale du substrat 102. Les dispositifs de régulation de niveau d'eau 305 sont disposés au niveau des extrémités transversales du terrain.

Les dispositifs d'introduction d'eau 303 sont configurés pour refouler de l'eau dans des canalisations d'alimentation 304 s'étendant sur toute la longueur du terrain pour alimenter chaque cellule. Les canalisations 304 sont non poreuses pour canaliser l'eau jusqu'à des jonctions avec différentes canalisations 306.

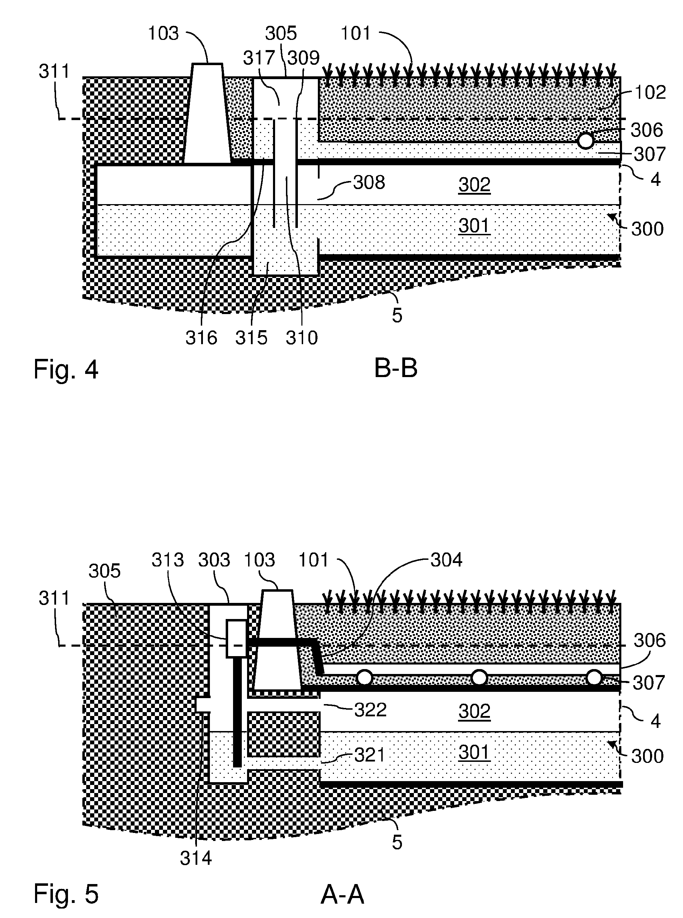

La figure 4 est une vue en coupe de l'installation 1 au niveau d'un dispositif de régulation de niveau d'eau 305. Le dispositif 305 comprend un boîtier collecteur d'eau 317 s'étendant verticalement sur le côté du substrat 102 et en communication avec le substrat 102 par l'intermédiaire des canalisations 306 et 307. Le dispositif 305 a pour fonction de maintenir de l'eau dans le substrat 102 jusqu'à un niveau maximal prédéfini et d'évacuer de l'eau du substrat 102 vers le réservoir 300 au-delà de ce niveau. Ainsi, lorsque l'eau dans le substrat 102 dépasse le niveau maximal, l'excédent est récupéré pour être stocké dans le réservoir 300. Le tube 309 traverse une paroi 316 ménagée dans le fond du boîtier. Un alésage 310 du tube 309 met ainsi en communication le boîtier avec la partie inférieure 315 du dispositif 305. La partie inférieure 315 communique avec l'intérieur du réservoir 300 par l'intermédiaire d'un orifice 308.

Lorsque le niveau d'eau dans le substrat 102 atteint l'extrémité supérieure du tube 309, l'excédent d'eau se déverse à travers l'alésage 310 dans la partie inférieure 315, pour ainsi être stockée dans le réservoir 300. La position verticale du tube 309 est avantageusement réglable pour permettre de définir le réglage du niveau d'eau maximal (illustré par la ligne en trait discontinu 311) à l'intérieur du substrat 102. Le tube 309 peut ainsi être monté coulissant dans le boîtier 317.

Le réservoir 300 présente une hauteur de stockage d'eau supérieure à 150 mm, avantageusement supérieure à 200mm, et de préférence supérieure à 250 mm. Une telle hauteur de stockage s'avère par exemple appropriée avec l'apport pluviométrique rencontré sur la majeure partie du territoire français. Ainsi, l'installation 1 peut présenter une capacité de stockage d'eau suffisante pour stocker un important excédent de pluviométrie, et ainsi assurer une autonomie en eau, malgré les variations de pluviométrie entre les différentes saisons. L'excédent de pluviométrie en période pluvieuse peut ainsi être exploité pour alimenter le substrat 102 en eau en saison plus sèche, sans pour autant devoir prélever de l'eau sur le réseau d'eau public. Outre un coût d'exploitation plus réduit, l'entretien du gazon est conforme aux prescriptions de développement durable de réduction de consommation d'eau.

On peut considérer qu'une installation est autonome en eau si le réservoir 300 a une capacité de stockage suffisante pour contenir encore de l'eau durant toute la saison sèche, en se contentant d'un apport drainé durant la saison humide..

Pour une localisation donnée de l'installation et en régime continu, le réservoir 300 stocke une quantité d'eau correspondant à la différence entre la précipitation annuelle au niveau de l'installation et la quantité d'évapotranspiration annuelle du substrat, en année humide. L'évapotranspiration définit le besoin en eau d'une culture de référence recouvrant intégralement le sol et étant parfaitement irriguée. L'évapotranspiration correspond à la quantité d'eau disparaissant du substrat 102 par évaporation lors d'une pluie, évaporation continue par transpiration du gazon 101 et disparition d'eau lors de la tonte de ce même gazon. Une autre méthode de calcul de la capacité de stockage d'eau du réservoir 300 est de déterminer la quantité maximale d'apport en eau dans le réservoir 300 durant une année humide sur le lieu d'implantation de l'installation 1.

Par exemple, pour l'exemple de I'Île-de-France, on a déterminé que l'évapotranspiration moyenne s'élevait à une valeur de 775 mm en région parisienne. L'évapotranspiration en année humide s'élève à 690 mm. Les précipitations annuelles en année humide pour la région parisienne s'élèvent à 978mm. En étudiant mois par mois l'évolution de la quantité d'eau drainée par le substrat 102, on constate que la capacité de stockage nécessaire pour assurer l'autonomie de l'installation 1 durant la période estivale s'élève à 340 litres par mètre carré de la surface de jeu 100. Une telle pluviométrie étant relativement représentative de la pluviométrie dans de nombreuses régions françaises, une telle capacité de stockage s'avérera suffisante pour la plupart des installations présentant une pluviométrie aussi favorable. Une capacité de stockage supérieure à 300 litres/m² s'avèrera appropriée dans un grand nombre de cas.

Comme détaillé par la suite, le réservoir 300 présente un orifice 314 d'évacuation d'eau dont la position définit la hauteur supérieure de stockage du réservoir 300. Lors de pluies exceptionnelles, l'installation 1 présente à la fois l'avantage de former un tampon avec les réseaux d'égout en stockant une partie de cet apport d'eau dans le réservoir 300 et d'évacuer un excédent d'eau du réservoir 300 pour éviter de saturer l'installation 1.

Le réservoir 300 se subdivise en un volume inférieur 301 rempli d'eau et un volume supérieur 302 rempli d'air. Le volume supérieur 302 s'étend au-dessus de l'orifice 314 pour garantir le maintien d'air dans le réservoir 300. La garantie du volume d'air 302 permet d'éviter une montée en pression du réservoir 300 lors de son remplissage. La hauteur du volume intérieur du réservoir 300 est ainsi supérieure à sa hauteur de stockage d'eau.

La figure 5 est une vue en coupe de l'installation 1 au niveau d'un dispositif d'introduction d'eau 303. Le dispositif d'introduction d'eau 303 comprend un boîtier en communication avec le réservoir 300 par l'intermédiaire d'orifices 321 et 322. L'orifice 321 est destiné à permettre un échange d'eau entre ce boîtier et le réservoir 300, le conduit 322 étant destiné à permettre un échange d'air entre ce boîtier et le réservoir 300. À cet effet, le conduit 321 est disposé sous l'orifice 314, et le conduit 322 est disposé au même niveau que l'orifice 314. L'orifice 314 permet d'évacuer un excédent d'eau du réservoir 300. Un tel excédent d'eau peut être induit par un événement pluvieux exceptionnel, ou par une pluviométrie importante pendant une certaine durée. L'orifice 314 permet ainsi d'éviter de saturer le réservoir 300 et d'évacuer l'excédent vers un réseau d'assainissement. Une pompe 313 prélève de l'eau dans la partie inférieure du boîtier et la refoule sélectivement dans une canalisation 304 vers chacune des cellules. Ainsi, si on constate que le niveau de l'eau dans un dispositif de régulation 305 est trop bas, on peut actionner la pompe 313 pour relever le niveau d'eau dans le substrat 102. Une commande automatique de la pompe 313 peut également être prévue. Avantageusement, le dispositif de régulation du niveau d'eau 305 est muni d'un organe de mesure du niveau de l'eau (non illustré). Ainsi, l'introduction d'eau dans le substrat 102 peut-être commandée automatiquement dès que le niveau de l'eau dans le substrat 102 devient trop bas.

L'introduction d'eau à l'intérieur du substrat 102 permet de limiter les pertes d'eau par évaporation, ce qui permet de limiter la quantité d'eau introduite dans le substrat 102.

Sur la base des dimensions de terrain décrites précédemment, on peut déterminer la capacité de drainage minimale que chaque cellule doit présenter. Une telle capacité de drainage est destinée à permettre un drainage optimal d'une pluie centennale d'une durée d'une heure et d'une hauteur de 70 mm. On considère que les canalisations 307 sont disposées à 320 mm sous la surface du substrat 102 et que le niveau d'eau doit rester à une distance d'au moins 100 mm sous la surface du substrat 102. En considérant que le substrat 102 comporte 30 % de vide apte à stocker de l'eau, on considère que ce substrat 102 est dimensionné pour stocker une hauteur d'eau exceptionnelle de 54 mm. On doit donc assurer le drainage d'une hauteur d'eau de 16 mm.

Le tube 309 doit permettre d'assurer un débit de 15 m³/h vers le réservoir 300 avec une pression hydraulique de 47,5 millimètres d'eau. Un diamètre du tube 309 de 100 mm s'avère à cet égard approprié.

Pour compenser l'évapotranspiration maximale que rencontre le substrat 102 durant une période estivale (avec les mesures prises pour la région parisienne), la pompe 313 doit être dimensionnée pour assurer un débit d'eau suffisant dans le substrat 102. Afin de prévoir un facteur de charge réduit à 10 heures par jour (afin d'aménager des périodes d'inactivité de la pompe, de permettre un fonctionnement essentiellement nocturne et d'autoriser des périodes d'entretien), une capacité de pompage de 7 m³/h s'avère suffisante sous une pression hydraulique de 0,2 bar, pour la surface du terrain sensiblement égale à 10000m² dans l'exemple.

Le réservoir 300 est avantageusement formé d'une multitude de caissons 312 reliés les uns aux autres et disposés au même niveau. Ces caissons 302 sont avantageusement en communication pour permettre de partager de mêmes dispositifs de régulation de niveau d'eau et d'introduction d'eau. Une telle association de caissons 312 permet de rattraper les défauts de terrassement du sol 5 et d'offrir une grande homogénéité de portance, les caissons étant des produits industriels comportant des dispersions de fabrication relativement réduites. De plus, la réalisation d'un tel réservoir 300 de façon modulaire est particulièrement aisée à partir de caissons distribués dans le commerce. Dans le cas où l'on utilise une multitude de caissons 312, ceux-ci présenteront avantageusement une hauteur de volume intérieur plus importante pour compenser la perte de volume de stockage induite par les parois latérales des caissons et des espaces les séparant. Un réservoir 300 comportant des caissons multiples permet en outre plus aisément de prolonger le réservoir au-delà de la périphérie du substrat 102, comme cela est illustré à la figure 4.

Le réservoir 300 peut être muni d'un dispositif de réchauffage d'eau, afin de maintenir l'eau à une température suffisante pour éviter le gel ou le maintien de neige au niveau du gazon 311. Le réchauffage intervenant à l'intérieur du substrat 102, les déperditions de chaleur restent alors très limitées.

## Revendications

1. Installation végétalisée (1), **caractérisée en ce qu'**elle comprend :
- un substrat (102) d'enracinement de végétaux (101) perméable à l'eau ;
- un réservoir d'eau (300) disposé à l'aplomb du substrat et s'étendant sur sensiblement toute la surface du substrat, le réservoir présentant une hauteur de stockage d'eau supérieure à 150mm ;
- une paroi étanche (4) séparant le substrat et le réservoir ;
- un dispositif de régulation de niveau d'eau (305) collectant de l'eau dépassant un certain niveau dans le substrat pour l'introduire dans le réservoir ;
- un dispositif d'introduction d'eau (303) prélevant de l'eau dans le réservoir pour l'introduire dans le substrat.

2. Installation végétalisée selon la revendication 1, dans laquelle le dispositif d'introduction d'eau comprend des tuyaux enterrés présentant des orifices de distribution d'eau répartis sur leur longueur.

3. Installation végétalisée selon la revendication 2, dans laquelle lesdits tuyaux sont horizontaux.

4. Installation végétalisée selon l'une quelconque des revendications précédentes, dans laquelle le dispositif de régulation de niveau d'eau comporte des moyens de réglage dudit niveau d'eau dans le substrat.

5. Installation végétalisée selon l'une quelconque des revendications précédentes, dans laquelle le dispositif de régulation de niveau d'eau comprend :
- un boîtier collecteur d'eau en communication avec le substrat ;
- un tube en saillie verticalement à l'intérieur du boîtier et en communication avec le réservoir, l'extrémité supérieure du tube définissant ledit niveau d'eau dans le substrat.

6. Installation végétalisée selon l'une quelconque des revendications précédentes, dans laquelle le réservoir comprend une pluralité de caissons en communication et disposés au même niveau.

7. Installation végétalisée selon l'une quelconque des revendications précédentes, dans laquelle le réservoir présente un orifice d'évacuation d'eau définissant la hauteur de stockage d'eau dans le réservoir, le réservoir comportant un volume d'air au-dessus de ladite hauteur de stockage d'eau.

8. Installation végétalisée selon l'une quelconque des revendications précédentes, dans laquelle le réservoir présente une capacité de stockage supérieure à 300 litres par mètre carré de substrat.

9. Installation végétalisée selon l'une quelconque des revendications précédentes, dans laquelle la surface supérieure du substrat est à l'air libre, et dans laquelle le réservoir présente une capacité de stockage supérieure à la différence entre la précipitation annuelle au niveau de l'installation et la quantité d'évapotranspiration annuelle du substrat, en année humide.

10. Installation végétalisée selon l'une quelconque des revendications précédentes, dans laquelle le substrat occupe une surface supérieure à 200 m²_{.}
